# EUROPÄISCHE PATENTANMELDUNG

(11) **EP 3 059 836 A1**
(43) Veröffentlichungstag der Anmeldung: **24.08.2016**
(21) Anmeldenummer: 15155430.0
(22) Anmeldetag: 17.02.2015
(51) Int. Cl.: H02K 5/04, H02K 7/116, B61C 9/50

(54) **Elektrische Maschine mit integriertem Antriebsritzel**

(71) Anmelder: Siemens Aktiengesellschaft, 80333 München (DE)
(72) Erfinder: Mages, Jörg, 91322 Gräfenberg (DE); Pfannschmidt, Bernd, 90574 Rosstal (DE); Seitz, Peter, 91224 Pommelsbrunn (DE)

(57) **Zusammenfassung**

Eine elektrische Maschine weist einen Rotor (1) und einen Stator (2) auf. Der Rotor (1) ist auf einer Rotorwelle (3) drehfest angeordnet. Die Rotorwelle (3) ist zumindest in einer ersten und in einer zweiten Lagerung (4, 5) gelagert, so dass die Rotorwelle (3) um eine Rotationsachse (6) drehbar ist. Auf der Rotorwelle (3) ist ein Antriebsritzel (7) angeordnet. Der Stator (2) umgibt den Rotor (1) radial außen. Die elektrische Maschine weist ein Gehäuse auf, das seinerseits ein einstückiges Gehäuseteil (8) aufweist. Der Stator (2) ist in dem einstückigen Gehäuseteil (8) befestigt. Das einstückige Gehäuseteil (8) überdeckt axial gesehen den Stator (2) zumindest teilweise und umgibt tangential gesehen den Stator (2) vollständig. Das einstückige Gehäuseteil (8) weist einen Erstreckungsteil (9) auf, der sich vom Stator (2) aus axial gesehen bis über das Antriebsritzel (7) hinaus erstreckt und tangential gesehen das Antriebsritzel (7) über einen Überdeckungswinkel (α) umgibt. Der Überdeckungswinkel (α) ist größer als 180°.

## Beschreibung

Die vorliegende Erfindung geht aus von einer elektrischen Maschine,
- wobei die elektrische Maschine einen Rotor und einen Stator aufweist,
- wobei der Rotor auf einer Rotorwelle drehfest angeordnet ist,
- wobei die Rotorwelle zumindest in einer ersten und in einer zweiten Lagerung gelagert ist, so dass die Rotorwelle um eine Rotationsachse drehbar ist,
- wobei auf der Rotorwelle ein Antriebsritzel angeordnet ist,
- wobei der Stator den Rotor radial außen umgibt,
- wobei die elektrische Maschine ein Gehäuse aufweist,
- wobei das Gehäuse ein einstückiges Gehäuseteil aufweist,
- wobei der Stator in dem einstückigen Gehäuseteil befestigt ist,
- wobei das einstückige Gehäuseteil axial gesehen den Stator zumindest teilweise überdeckt und tangential gesehen den Stator vollständig umgibt.

Derartige elektrische Maschinen sind allgemein bekannt. Sie werden beispielsweise als Bahnantriebe verwendet.

Bei Bahnantrieben werden Motor und Getriebe getrennt gefertigt und in jeweils einem eigenen Gehäuse angeordnet. Der Motor und das Getriebe werden in einer Endmontage miteinander verbunden. Für das Verbinden des Motorgehäuses und des Getriebegehäuses müssen die beiden Gehäuse miteinander korrespondierende Flanschflächen aufweisen. Die Anfertigung derartiger Flanschflächen ist aufwändig. Weiterhin müssen die Rotorwelle des Motors und die Getriebewelle des Getriebes drehfest miteinander verbunden werden. Die Verbindung von Motor und Getriebe miteinander gestaltet sich dadurch relativ aufwändig, ist kostenintensiv und führt zu zusätzlichem Gewicht. Die Aufgabe der vorliegenden Erfindung besteht darin, eine einfache und zuverlässige elektrische Motor-Getriebe-Einheit zu schaffen.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 10. Anspruch 11 nennt eine bevorzugte Verwendung.

Erfindungsgemäß wird die Aufgabe dadurch gelöst,
- dass das einstückige Gehäuseteil einen Erstreckungsteil aufweist, der sich vom Stator aus axial gesehen bis über das Antriebsritzel hinaus erstreckt und tangential gesehen das Antriebsritzel über einen Überdeckungswinkel umgibt, und
- dass der Überdeckungswinkel größer als 180° ist.

Erfindungsgemäß fluchtet also die das Antriebsritzel tragende Welle mit der Rotorwelle und ist innerhalb des einstückigen Gehäuseteils - genauer: im Bereich des Erstreckungsteils - angeordnet. Der Erstreckungsteil, der seinerseits Bestandteil des einstückigen Gehäuseteils ist, bildet also das Gehäuse für die das Antriebsritzel tragende Welle.

In der Regel weist das Gehäuse axial gesehen auf der vom Antriebsritzel abgewandten Seite ein Lagerelement auf, das mit dem einstückigen Gehäuseteil lösbar verbunden ist und in dem die erste Lagerung der Rotorwelle angeordnet ist. Das Lagerelement kann insbesondere als Lagerschild ausgebildet sein. Die zweite Lagerung der Rotorwelle ist vorzugsweise am Erstreckungsteil axial gesehen jenseits des Antriebsritzels angeordnet. Insbesondere kann die zweite Lagerung der Rotorwelle Bestandteil des Erstreckungsteils sein.

Die Rotorwelle ist vorzugsweise einstückig ausgebildet. Das Antriebsritzel kann ein eigenständiges Bauteil sein, das drehfest mit der Rotorwelle verbunden ist. Vorzugsweise jedoch ist das Antriebsritzel integraler Bestandteil der Rotorwelle.

Das Antriebsritzel kämmt im Betrieb mit einem Laufrad, das in einem Getriebegehäuse gelagert ist. Das Getriebegehäuse ist mit dem Erstreckungsteil unlösbar verbunden. Es ist jedoch möglich, dass zwischen dem Getriebegehäuse und dem Erstreckungsteil mindestens ein Gehäusedeckel - also entweder ein Gehäusedeckel oder mehrere Gehäusedeckel - angeordnet ist.

Das einstückige Gehäuseteil ist in der Regel als Gussteil ausgebildet.

Die elektrische Maschine kann insbesondere als Bahnantrieb verwendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine im Querschnitt,
- FIG 2: einen Schnitt längst einer Linie II-II in FIG 1 und
- FIG 3: ein Bahnfahrzeug.

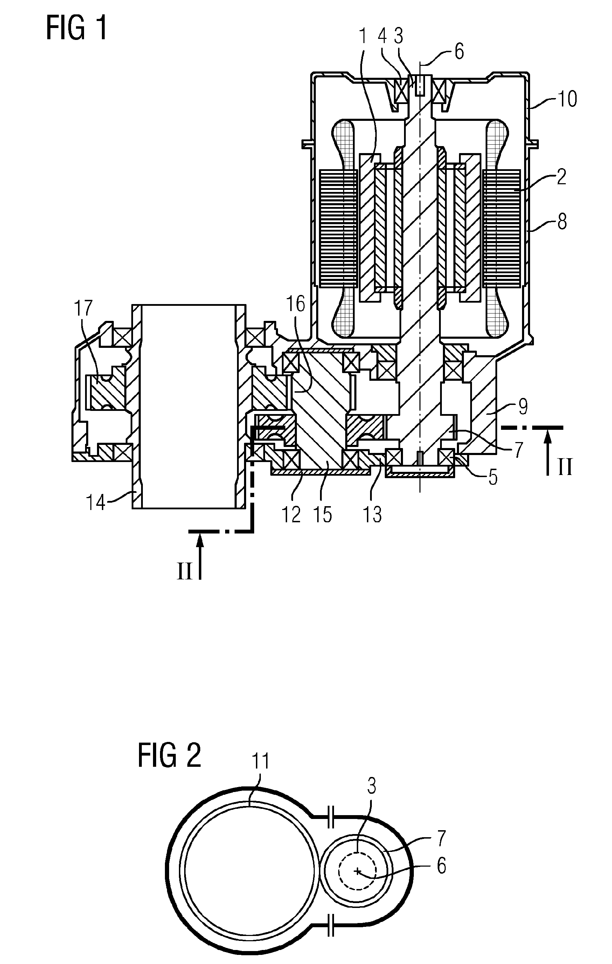

Gemäß FIG 1 weist eine elektrische Maschine einen Rotor 1 und einen Stator 2 auf. Der Rotor 1 ist auf einer Rotorwelle 3 drehfest angeordnet. Beispielsweise kann der Rotor 1 auf die Rotorwelle 3 aufgeschrumpft sein oder über eine übliche Keilverbindung verkeilt sein.

Die Rotorwelle 3 ist in einer ersten Lagerung 4 und in einer zweiten Lagerung 5 gelagert. Die Rotorwelle 3 ist dadurch um eine Rotationsachse 6 drehbar.

Soweit nachfolgend die Begriffe "axial", "radial" und "tangential" verwendet werden, sind sie stets auf die Rotationsachse 6 bezogen. "Axial" ist eine Richtung parallel zur Rotationsachse 6. "Radial" ist eine Richtung orthogonal zur Rotationsachse 6 auf die Rotationsachse 6 zu bzw. von ihr weg. "Tangential" ist eine Richtung, die sowohl zur Axialrichtung als auch zur Radialrichtung orthogonal ist. Tangential ist also eine Richtung, die bei konstanter Axialposition und in konstantem radialem Abstand kreisförmig um die Rotationsachse 6 herum gerichtet ist.

Auf der Rotorwelle 3 ist ein Antriebsritzel 7 angeordnet. Der Stator 2 umgibt den Rotor 1 radial außen. Die elektrische Maschine ist also als (üblicher) Innenläufer ausgebildet.

Die elektrische Maschine weist weiterhin ein Gehäuse auf. Das Gehäuse besteht aus mehreren Teilen. Insbesondere besteht das Gehäuse (unter anderem) aus einem Gehäuseteil 8, das als solches einstückig ausgebildet ist. Das Gehäuseteil 8 ist vorzugsweise als Gussteil ausgebildet. Alternativ kann es sich um eine Schweißkonstruktion handeln.

Der Stator 2 ist in dem einstückigen Gehäuseteil 8 befestigt. Das einstückige Gehäuseteil 8 überdeckt axial gesehen den Stator 2 teilweise oder vollständig. Weiterhin umgibt das einstückige Gehäuseteil 8 tangential gesehen den Stator 2 vollständig.

Das einstückige Gehäuseteil 8 weist einen Erstreckungsteil 9 auf. Der Erstreckungsteil 9 ist also integraler Bestandteil des einstückigen Gehäuseteils 8. Der Erstreckungsteil 9 erstreckt sich vom Stator 2 aus axial gesehen bis über das Antriebsritzel 7 hinaus. Tangential gesehen umgibt der Erstreckungsteil 9 gemäß FIG 2 das Antriebsritzel 7 über einen Überdeckungswinkel α. Der Überdeckungswinkel α ist größer als 180°. Er kann beispielsweise zwischen 200° und 270° liegen. Die erste Lagerung 4 ist axial gesehen auf der vom Antriebsritzel 7 abgewandten Seite angeordnet. Insbesondere weist das Gehäuse auf der axial gesehen vom Antriebsritzel 7 abgewandten Seite ein Lagerelement 10 auf. Das Lagerelement 10 ist mit dem einstückigen Gehäuseteil 8 lösbar verbunden. In dem Lagerelement 10 ist die erste Lagerung 4 der Rotorwelle 3 angeordnet. Der Rotor 1 ist somit axial gesehen zwischen der ersten Lagerung 4 und dem Antriebsritzel 7 angeordnet. Das Lagerelement 10 kann insbesondere als Lagerschild ausgebildet sein.

Die zweite Lagerung 5 der Rotorwelle 3 ist am Erstreckungsteil 9 angeordnet. Insbesondere ist die zweite Lagerung 5 axial gesehen jenseits des Antriebsritzels 7 angeordnet. Das Antriebsritzel 7 ist somit axial gesehen zwischen der zweiten Lagerung 5 und dem Rotor 1 angeordnet. Die zweite Lagerung 5 der Rotorwelle 3 kann insbesondere Bestandteil des Erstreckungsteils 9 sein.

Die Rotorwelle 3 ist vorzugsweise einstückig ausgebildet, das heißt sie erstreckt sich ohne Unterbrechung und ohne Verbindung von mehreren axial verschiedene Bereiche überdeckenden Teilen von der ersten Lagerung 4 bis zur zweiten Lagerung 5 und trägt sowohl den Rotor 1 als auch das Antriebsritzel 7. Das Antriebsritzel 7 ist vorzugsweise integraler Bestandteil der Rotorwelle 3. Beispielsweise kann das Antriebsritzel 7 zusammen mit dem Rest der Rotorwelle 3 aus dem Vollen gefräst sein.

Das Antriebsritzel 7 kämmt bei vollständig montiertem Getriebe mit einem weiteren Zahnrad 11, nachfolgend Laufrad 11 genannt. Das Laufrad 11 ist in einem Getriebegehäuse 12 gelagert. Das Getriebegehäuse 12 ist mit dem Erstreckungsteil 9 unlösbar verbunden. Entsprechend der Darstellung in FIG 1 ist es jedoch möglich, dass zwischen dem Getriebegehäuse 12 und dem Erstreckungsteil 9 mindestens ein Gehäusedeckel 13 angeordnet ist.

Es ist möglich, dass das Laufrad 11 unmittelbar auf einer Abtriebswelle 14 des Getriebes angeordnet ist. Alternativ kann das Laufrad 11 entsprechend der Darstellung in FIG 1 auf einer Zwischenwelle 15 des Getriebes angeordnet sein und ein weiteres Zahnrad 16 tragen, das seinerseits mit einem auf der Abtriebsseite 14 angeordneten Zahnrad 17 kämmt.

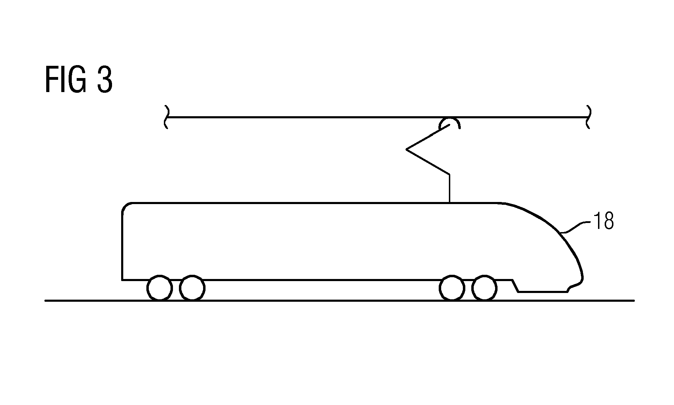

Die erfindungsgemäße elektrische Maschine kann nach Bedarf eingesetzt werden. Beispielsweise ist es entsprechend der Darstellung in FIG 3 möglich, sie als Bahnantrieb zu verwenden, also als Fahrantrieb für ein Schienenfahrzeug 18.

Zusammengefasst betrifft die vorliegende Erfindung somit folgenden Sachverhalt:
Eine elektrische Maschine weist einen Rotor 1 und einen Stator 2 auf. Der Rotor 1 ist auf einer Rotorwelle 3 drehfest angeordnet. Die Rotorwelle 3 ist zumindest in einer ersten und in einer zweiten Lagerung 4, 5 gelagert, so dass die Rotorwelle 3 um eine Rotationsachse 6 drehbar ist. Auf der Rotorwelle 3 ist ein Antriebsritzel 7 angeordnet. Der Stator 2 umgibt den Rotor 1 radial außen. Die elektrische Maschine weist ein Gehäuse auf, das seinerseits ein einstückiges Gehäuseteil 8 aufweist. Der Stator 2 ist in dem einstückigen Gehäuseteil 8 befestigt. Das einstückige Gehäuseteil 8 überdeckt axial gesehen den Stator 2 und umgibt tangential gesehen den Stator 2 vollständig. Das einstückige Gehäuseteil 8 weist einen Erstreckungsteil 9 auf, der sich vom Stator 2 aus axial gesehen bis über das Antriebsritzel 7 hinaus erstreckt und tangential gesehen das Antriebsritzel 7 über einen Überdeckungswinkel α umgibt. Der Überdeckungswinkel α ist größer als 180°.

Die vorliegende Erfindung weist viele Vorteile auf. Insbesondere ist es möglich, das Gewicht der Motor-Getriebe-Einheit zu reduzieren, ohne funktionelle Einschränkungen oder zusätzliche Kosten in Kauf nehmen zu müssen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Rotor (1) und einen Stator (2) aufweist,
- wobei der Rotor (1) auf einer Rotorwelle (3) drehfest angeordnet ist,
- wobei die Rotorwelle (3) zumindest in einer ersten und in einer zweiten Lagerung (4,5) gelagert ist, so dass die Rotorwelle (3) um eine Rotationsachse (6) drehbar ist,
- wobei auf der Rotorwelle (3) ein Antriebsritzel (7) angeordnet ist,
- wobei der Stator (2) den Rotor (1) radial außen umgibt,
- wobei die elektrische Maschine ein Gehäuse aufweist,
- wobei das Gehäuse ein einstückiges Gehäuseteil (8) aufweist,
- wobei der Stator (2) in dem einstückigen Gehäuseteil (8) befestigt ist,
- wobei das einstückige Gehäuseteil (8) axial gesehen den Stator (2) zumindest teilweise überdeckt und tangential gesehen den Stator (2) vollständig umgibt,
**dadurch gekennzeichnet,**
- **dass** das einstückige Gehäuseteil (8) einen Erstreckungsteil (9) aufweist, der sich vom Stator (2) aus axial gesehen bis über das Antriebsritzel (7) hinaus erstreckt und tangential gesehen das Antriebsritzel (7) über einen Überdeckungswinkel (α) umgibt, und
- **dass** der Überdeckungswinkel (α) größer als 180° ist.

2. Elektrische Maschine nach Anspruch 1, **dadurch gekennzeichnet, dass** das Gehäuse axial gesehen auf der vom Antriebsritzel (7) abgewandten Seite ein Lagerelement (10) aufweist, das mit dem einstückigen Gehäuseteil (8) verbunden ist und in dem die erste Lagerung (4) der Rotorwelle (3) angeordnet ist.

3. Elektrische Maschine nach Anspruch 2, **dadurch gekennzeichnet, dass** das Lagerelement (10) als Lagerschild ausgebildet ist.

4. Elektrische Maschine nach Anspruch 1, 2 oder 3, **dadurch gekennzeichnet, dass** am Erstreckungsteil (9) axial gesehen jenseits des Antriebsritzels (7) die zweite Lagerung (5) der Rotorwelle (3) angeordnet ist.

5. Elektrische Maschine nach Anspruch 4, **dadurch gekennzeichnet, dass** die zweite Lagerung (5) der Rotorwelle (3) Bestandteil des Erstreckungsteils (9) ist.

6. Elektrische Maschine nach einem der obigen Ansprüche, **dadurch gekennzeichnet, dass** die Rotorwelle (3) einstückig ausgebildet ist.

7. Elektrische Maschine nach Anspruch 6, **dadurch gekennzeichnet, dass** das Antriebsritzel (7) integraler Bestandteil der Rotorwelle (3) ist.

8. Elektrische Maschine nach einem der obigen Ansprüche, **dadurch gekennzeichnet, dass** das Antriebsritzel (7) mit einem Laufrad (11) kämmt, dass das Laufrad (11) in einem Getriebegehäuse (12) gelagert ist und dass das Getriebegehäuse (12) mit dem Erstreckungsteil (9) lösbar verbunden ist.

9. Elektrische Maschine nach Anspruch 8, **dadurch gekennzeichnet, dass** zwischen dem Getriebegehäuse (12) und dem Erstreckungsteil (9) mindestens ein Gehäusedeckel (13) angeordnet ist.

10. Elektrische Maschine nach einem der obigen Ansprüche, **dadurch gekennzeichnet, dass** das einstückige Gehäuseteil (8) als Gussteil ausgebildet ist.

11. Elektrische Maschine nach einem der obigen Ansprüche, **dadurch gekennzeichnet, dass** sie als Bahnantrieb verwendet wird.
